# EUROPEAN PATENT SPECIFICATION

(11) **EP 0 411 326 B1**
(45) Date of publication and mention of the grant of the patent: **19.04.1995**
(21) Application number: 90112506.2
(22) Date of filing: 29.06.1990
(51) Int. Cl.: A23P 1/04, A23L 1/22

(54) **Microcapsules containing food additives and their use**
Nahrungsmittelzusätze enthaltende Mikrokapseln und deren Verwendung
Additifs alimentaires comprenant des microcapsules et leur usage

(30) Priority: 30.06.1989 US 373870; 29.03.1990 US 501079
(43) Date of publication of application: 06.02.1991
(73) Proprietor: BIO-DAR LTD., Rehovot 76121 (IL)
(72) Inventor: Rotman, Avner, Rehovot 76304 (IL); Blatt, Yoav, Rehovot 76248 (IL)
(74) Representative: VOSSIUS & PARTNER

(56) References cited:
- EP-A- 0 229 730
- EP-A- 0 298 152
- US-A- 4 102 806

## Description

The present invention relates to a means for stabilizing various food additives, such as flavouring agents during baking or cooking processes, particularly such additives which should be released towards the end of the process or shortly thereafter.

Various food additives, such as sweeteners and spices, are unstable under conditions prevailing during baking or cooking processes and may thus be destroyed during these processes, thereby considerably limiting their applicability. One such additive is the widely used sweetening substance aspartame (N-L-α-aspartyl-L-phenylalanine-1-methyl ester) which is particularly sensitive to the combination of an aqueous environment and high temperatures encountered in cooking or baking. Although aspartame is comparatively stable at elevated temperatures under anhydrous conditions or in an aqueous environment at low temperatures, the combination of heat and an aqueous environment causes the breakdown of this dipeptide substance whereby its sweetening ability is destroyed.

One method heretofore used for stabilizing food additives is microencapsulation. However, in most microencapsulation methods, the active ingredient is protected and stabilized not only during cooking or baking, but remains encapsulated while the food product is being consumed. The encapsulated food additive is released only in the mouth, stomach or intestines, by disruption of the coating layer, by diffusion or by dissolution of the coating layer (e.g. in a pH-dependent or other manner). While such a method is acceptable for administration of medications or vitamins, which need not be available to the consumer until they reach the stomach or intestines, it is unacceptable for flavoring agents, the taste of which should be experienced in the mouth.

U.S. Patent No. 3,796,814 discloses condiment-containing fatty particulates for use in the baking process. The particulates are prepared by contacting the heat-sensitive condiment with preformed fatty matrix particles at a temperature slightly above the melting point of the matrix for a time sufficient for absorption of the condiment into the particles.

U.S. Patent No. 4,384,004 discloses solid particles of encapsulated aspartame suitable for incorporation into chewing gum.

U.S. Patents Nos. 4,711,784 and 4,740,376 disclose a method and composition for protecting sweeteners, such as aspartame, or other flavouring agents by encapsulation, particularly for use in chewing gum. The encapsulation composition disclosed comprises a blend of high molecular weight polyvinyl acetate having a molecular weight of about 20,000-100,000 and a hydrophobic plasticizer.

U.S. Patent No. 4,752,485 discloses compositions having a core material being a sweetener, such as aspartame, another flavouring agent, a drug or the like, and a hydrophobic matrix consisting of lecithine, an edible material at a specific melting point and at least one triglyceride.

U.S. Patent No. 3,914,439, discloses a dry particulate flavour composition comprising liquid flavouring oils which are adsorbed onto sugar crystals which in turn are coated with hydrogenated vegetable oil. The crystals are then sealed with a shellac coating to form a dry, free-flowing particulate flavour composition. These flavour compositions are used in tea brewing bags, where contact with hot water melts the vegetable oil and releases the flavour.

U.S. Patent No. 3,317,433 discloses heat rupturable capsules which are used as components in an external embedding substance capable of reacting or combining with the core entity materials when the core materials are released by heat rupture. Examples of such products include capsules containing solvents or plasticizers embedded in a solid adhesive film.

U.S. Patent No. 4,810,534 discloses film-coated compositions comprising crosslinked, refined shellac and an edible component. The coated compositions are useful in composite food articles having phases which differ substantially in their water lability being in contact with each other.

U.S. Patent No. 3,091,567 discloses encapsulating agents with a defined water repellency which may contain volatile, relatively water-insoluble flavours or other substances.

U.S. Patent No. 4,288,460 discloses a method for protecting granular water-soluble food ingredients which deteriorate upon exposure to the atmosphere. By encapsulating these ingredients in a protective coating consisting essentially of a fatty acid derivative selected from polyoxyethylene sorbitan monooleate, polyoxyethylene sorbitan monostearate and lecithin; propylene glycol; and a flow agent such as fumed silica or carboxymethylcellulose. The coated particles have a long shelf life but are substantially instantaneously soluble in water.

U.S. Patent No. 4,710,391, discloses a flavouring agent used to flavour fried foods which is encapsulated so that the flavouring agent can be readily removed from the oil used to fry the food products. A high melting point fat coating on the flavouring agent helps to protect the encapsulant from water and from physical damage prior to and during frying.

U.S. Patent No. 4,704,288 discloses heat stabilized compositions of aspartame and a partially hydrogenated vegetable oil melting at about 49°C or above. The particles are formed into 8-40 standard mesh particle size, i.e., from 420 to 2308 microns. Both the type of fat and the particle size are critical to this process.

U.S. Patents Nos. 4,722,845 and 4,839,184 disclose delivery systems for effecting a controlled release of active ingredients, in which the active ingredients are encapsulated in a matrix consisting of a hydrogenated or partially hydrogenated fat, a polyethylene wax having a melting point of 106°C or more and a triglyceride.

U.S. Patent No. 4,824,681 discloses a composition of a sweetener encapsulated by a coating material comprising a hydrophobic polymer and a hydrophobic plasticizer. The composition is intended particularly for incorporation into chewable food products such as chewing gum and chewable confections.

EP-A1-53844 discloses dipeptide sweetening compositions in which the dipeptide is encapsulated in a matrix consisting of solid foods, emulsifiers and polysaccharides. Such a composition protects the dipeptide against degradation by heat or enzymes and this gives the food a long-lasting sweetness.

US-A-4,102,806 discloses a method of producing microcapsules which method comprises encapsulating as core material food additives or other material with an oleaginous material in an organic solvent whereby the coating may comprise hydrogenated oil-and-fat.

EP-A-229 730 discloses artificial sweetening compositions which may be encapsulated with a hydrophobic coating.

None of the above methods was fully satisfactory for stabilizing food additives which are sensitive to the combined action of heat and water so as to keep them intact during cooking or baking but make them available to the consumer of the food immediately upon tasting and eating.

It is an object of the present invention to overcome the above-noted deficiencies in the prior art.

It is another object of the present invention to provide means for stabilizing food additives during cooking or baking processes in particular food additives which are labile upon simultaneous exposure to heat and water at temperatures prevailing during cooking or baking, while releasing them towards the end of the process or shortly thereafter. In the case where said food additive is a flavouring agent, it thus becomes available to the senses upon consumption of food products containing them. According to the present invention food additives are coated in such a way that after exposure to a certain temperature for a certain amount of time, the coating layer is disrupted or disintegrated so that the coated food additive is exposed.

The present invention provides a microcapsule having a core and a coating, the core comprising a food additive, the microcapsule being characterized in that; said food additive is labile upon simultaneous exposure to heat and water; said coating comprises hydrogenated castor oil (HCO), whereby said microcapsule is adapted to deliver said food additive to a food product to be baked or cooked and essentially protecting said food additive from simultaneous exposure to heat and water during the baking or cooking.

Thus in one embodiment of the present invention the coating comprises an HCO film, which has a melting point of about 84-88°C. This embodiment will, at times, be referred to herein as the "HCO embodiment". It was surprisingly found in accordance with the invention that HCO is far superior than other fatty substances having a similar melting point, in its ability to protect food additives which are labile upon the simultaneous exposure to an aqueous environment and to heat encountered during cooking or baking, but rendering them available upon consumption.

According to the HCO embodiment, small particles of food additives are coated with HCO or a mixture of HCO and a compatible coating material. HCO *per se* has a melting point of about 84-88°CC but by the use of compatible coating material the melting point of the coating may be shifted from about 70 to about 100°C.

A compatible coating material which may be included together with HCO may be any one of a large number of such substances acceptable for use in foods, e.g. various food grade polymers, various fatty substances etc. Examples of such substances are ethylcellulose, methylcellulose, calcium stearate, stearic acid, and the like. Particularly preferred, in accordance with the HCO embodiment are coatings which have a melting point in the range of about 80-90°C such as the HCO *per se*, or a mixture of 5-7% ethyl cellulose in HCO, a mixture of HCO with calcium stearate and stearic acid and the like.

In the following, the working of the HCO embodiment will be described at times with reference to a microcapsule having a coating consisting of HCO. It should be clear to a person skilled in the art that the same description applies *mutatis mutandis* also to microcapsules having a coating comprising HCO together with other compatible substances as specified above.

During the first stage of the cooking or baking process, the coating layer remains intact but when the temperature rises beyond the melting point of the coating, the coating begins to melt. It should be noted that HCO, like all fats, does not have a very defined melting point and the melting thus occurs over a range of temperatures with the fluidity of the HCO increasing with the increase in temperature. With the increase in fluidity of the coating, the core is gradually exposed releasing the food additive contained therein. However, since HCO is very hydrophobic it repels water and thus even after a complete melting of the HCO at a temperature above 90°C, the exposure of the core is not immediate and may be delayed for several more minutes.

The microcapsule in accordance with the HCO embodiment, is particularly suitable for use in food products which are processed by cooking or baking or by prolonged cooking at moderate temperatures, although not limited to such applications. Such products may, for example, be various dairy products such as yoghourt or flavoured cream cheese which are processed by cooking at moderate temperatures. In some cases yoghourt is warmed during its preparation to a temperature of about 65°C from 1-4 hours before being filled into the cups. The microcapsules are devised so that the coating is only partially disrupted during this time so that water reaches the core only to a very small extent and thus the food additive in the core remains protected. After this treatment, the yoghourt is stored at room temperature for a certain amount of time and then refrigerated for about another 24 hours or more. During this time, the food additives diffuse out through the partially disrupted coating of the capsules. Where the said additive is a sweetener such as aspartame, the yoghourt thus acquires a sweet taste.

As another example, the microcapsules in accordance with the HCO embodiment are suitable also for use in products which are processed by exposure to a brief baking period, such as cookies, biscuits, doughnuts and the like. During such a brief baking period the exposure of the food additive occurs usually at a time when most of the water in the product has been evaporated.

It was surprisingly found in accordance with the present invention that other chemically similar coating materials which have a melting point at the same range of temperatures as HCO, were far inferior to HCO in their capability to protect a food additive encapsulated thereby from simultaneous exposure to both heat and water. For example, a mixture of calcium stearate and stearic acid which has a melting point of about 86°C only provided about 60-65% protection for aspartame in baking products as compared to over 90% protection provided by HCO.

The food additives included in microcapsules in accordance with the invention may be any one of a large variety of additives such as spices, salts, acids, sweetening agents, leavening agents (which have to be protected throughout most of the baking or cooking process), yeasts, bacteria, dyes and the like.

A particularly preferred food additive to be contained in microcapsules according to the present invention is the sweetener aspartame.

In addition to the food additives the core may comprise also various inert substances which by themselves do not have an effect on the finished food product, such as polyvinylpyrrolidone (PVP), calcium phosphate, polydextrose, methylcellulose, ethylcellulose, maltodextrine and the like.

For the preparation of microcapsules according to the present invention, small particles of food additives are coated with a coating as defined above, which coating may be accomplished in any acceptable manner, such as in a modified fluidized bed apparatus. The apparatus can be adapted in such a way that small coated microcapsules i.e., less than about 500 microns in diameter, can be produced without agglomeration. Such microcapsules are generally preferred for ensuring even distribution of the food additives in the food product to be cooked or baked.

The present invention also provides a food additive preparation comprising microcapsules as defined above. Such preparation may be provided in various packagings, either for industrial or domestic use, optionally accompanied with instructions for use in various food products.

The present invention further provides a process for cooking or baking comprising the use of the above microcapsules or preparation.

Finally, also provided by the present invention are food products prepared with the above microcapsules and preparations.

The invention will now be illustrated in a number of non-limiting specific embodiments described in the following Examples. A person skilled in the art will no doubt appreciate that these are only examples of the generic teaching of the invention as defined in the claims.

### EXAMPLE 1: Granulation of aspartame with PVP and coating with HCO

### A: Granulation

Half a kilogram of aspartame particles of a size of about 20 microns, was mixed with 150 g PVP and loaded into a modified Uni-Glatt powder coater. The powder was fluidized at an inlet temperature of about 30°C and sprayed with 250 ml water over a period of ten minutes. The granulated material was dried for 40 minutes at 40°C inlet temperature.

The granules were sieved, and the fraction (80%) between 50 and 350 microns was separated from the rest and used for further processing.

### B: Coating

The separated fraction obtained in A above was loaded into the Uni-Glatt apparatus and sprayed with 1400 g of melted HCO (m.p. 85°C). The inlet temperature was 45°C and the total amount of the coating was sprayed over a period of 45 minutes. The fluidizing air flow was changed during the process as needed in order to keep the material fluidizing well. The so obtained coated material was sieved, and the particles having a diameter above about 500 microns were discarded and the remaining particles, being thus of a diameter below 500 microns were used in baking.

### EXAMPLE 2: Granulation of Aspartame with Polydextrose, and coating with HCO

500 grams of Polydextrose A (Pfizer) and 500 grams of aspartame were mixed and granulated as described in Example 1A. Only 150 ml of water was used in order to obtain a particle size of about 50-350 microns. Five hundred grams of the granules were coated with 1400 grams of HCO in a similar manner as Example 1B. The so obtained microcapsules were used in baking.

### EXAMPLE 3: Coating of Aspartame with HCO and a Mixture of Calcium Stearate and Stearic Acid

By the method of Example 1B, 500 grams of granulated aspartame, 50-350 microns in size, were coated with 500 grams of hydrogenated castor oil. 250 grams of calcium stearate and 250 grams of stearic acid were mixed together and melted. The cold solid mixture had a melting point of 86°C. 500 grams of this melted mixture was used to coat 500 grams of the HCO-coated granules in a similar manner as above. The coated material was used in baking of batters and doughs.

### EXAMPLE 4: Granulation of Aspartame with Calcium Phosphate and Sodium Bicarbonate and coating with HCO

50 grams of calcium phosphate and 50 grams of sodium bicarbonate, were milled together to give a very fine powder. This powder was mixed with 500 grams of aspartame and 150 grams of PVP. The mixture was fluidized in a Uni-Glatt powder coater at an inlet temperature of 30°C. The granulation was achieved by spraying 200 ml of water over a period of ten minutes. The granules were dried for one hour at 35°C. 500 grams of sieved material were coated with 1400 grams of hydrogenated castor oil as described in Example 1B. The so obtained microcapsules were used for baking.

### EXAMPLE 5: Granulation of Aspartame with Ammonium Carbonate and coating with HCO

In a similar manner as in Example 4, 50 grams of milled ammonium carbonate, 500 grams of aspartame and 150 grams of PVP were granulated and coated with HCO. The so obtained microcapsules were used in baking.

### EXAMPLE 6: Coating of aspartame with a Suspension of Sodium Bicarbonate and Calcium Phosphate, and then with HCO

500 grams aspartame granules, granulated as in Example 1A, were loaded into a Uni-Glatt apparatus and fluidized at 25°C. 25 grams of sodium bicarbonate and 25 grams of calcium phosphate were milled and suspended in 200 grams of partially hydrogenated vegetable oil (m.p. 38°C) at 40°C. The suspension was sprayed onto the aspartame granules. These granules were the coated by 1200 grams of melted HCO. The so obtained microcapsules were used in baking.

### EXAMPLE 7: Cookies made from Aspartame coated with HCO

Cookies were made from the following ingredients, the concentration in percentage by weight is given for each ingredient:

| **Part A** | |
|---|---|
| Flour | 49.6 |
| Corn Starch | 3.6 |
| Polydextrose A (Pfizer) | 15.4 |
| Sodium chloride | 0.4 |
| Sodium bicarbonate | 0.2 |
| Ammonium carbonate | 0.3 |
| Aspartame microcapsules in accordance with Example 1B | 1.1 |

| **Part B** | |
|---|---|
| Hydrogenated soybean oil, m.p. 38°, flushed by nitrogen | 13.6 |
| Eggs (whole, mixed, frozen) | 2.7 |
| Water | 10.8 |
| Malt (dry) | 1.4 |
| Artificial vanilla flavour | 0.9 |

To make the cookies, the ingredients of Part A were mixed and the ingredients of Part B were creamed together. The mixed ingredients of Part A were then admixed into the creamed ingredients of Part B to obtain a smooth mixture. Round cookies were formed, 5 cm in diameter, 0.5 cm high. The cookies were baked at 240°C for six minutes. The cookies were sweet in taste, indicating that the aspartame had not been destroyed by the combination of heat and water.

### Analysis

Analysis of these cookies for their aspartame content was performed by two methods:
a) Ninhydrin method which showed recovery of 90-97% of the aspartame.
b) HPLC (High performance liquid chromatography) method which showed recovery of 90-92% of the aspartame.

### EXAMPLE 8: Coating of aspartame with different fats

### A. Granulation:

### i) Granulation with methylcellulose

250 grams of aspartame powder were mixed with 250 grams of methylcellulose Methocel A15LV (Dan Chemicals). The mixture was fluidized and sprayed with 220 ml of water for a period of ten minutes, and the mixture was dried at 35°C for a period of twenty minutes. The yield was 94% by weight, and 70% of the particles were in the size range of about 50-300 microns.

### B. Coating:

Aspartame granules obtained above were coated with various fatty substances to determine whether the type of the fatty substance had any effect on the stability of aspartame under baking conditions:

### i) Glyceryl monostearate (GMS)

500 grams of aspartame granules were coated in a modified fluidizer bed apparatus with 500 grams of melted glyceryl monostearate which has a melting point of 65°C.

### ii) Calcium stearate and Stearic acid

500 grams of aspartame granules were coated with a mixture of 300 grams calcium stearate and 200 grams stearic acid, in melted form. The melting point of this mixture of stearic acid and calcium stearate is 86°C.

### iii) Stearic acid

500 grams of aspartame granules were coated with 500 grams of melted stearic acid in the fluidized bed apparatus. Stearic acid has a melting point of 69°C.

### iv) Ethyl Cellulose dissolved in Hydrogenated Castor Oil

500 grams of granules II were coated with 450 grams of melted HCO in which 50 grams of ethyl cellulose (Ethocel 4) were dissolved. The coating was performed in a modified fluidized bed apparatus.

### v) Coating of Compacted Aspartame

500 grams of compacted aspartame (the particles having a diameter of about 80-250») were coated with HCO as described in Example 8.

### C. Use of the coated aspartame granules

The coated aspartame microcapsules prepared above were used in cookies baked according to the procedure of Example 7, and the degree of recovery of the aspartame in the baked cookies was measured. The results are shown in the table below:

| **Coating** | **% Aspartame Recovery** |
|---|---|
| Glyceryl monostearate | 55-60 |
| Stearic acid | 45-48 |
| Calcium stearate/stearic acid | 60-65 |
| Hydrogenated Castor Oil | 90-95 |
| Ethyl Cellulose dissolved in Hydrogenated Castor Oil | 90-97 |

The above result clearly show the unexpected advantage of coating with HCO as compared to other coating substances having similar melting points.

### Example 9: Granulation of aspartame with maltodextrin and a mixture of maltodextrin and methylcellulose and coating with HCO.

### A. Granulation

1920g aspartame particles of a size of about 10-20 microns were mixed with 480g maltodextrin DE-10 and loaded into a modified Glatt powder coater GPCG 3. The powder was fluidized at an inlet temperature of 30°C and sprayed with 600ml of citric acid solution, pH 2.3 over a period of 10 min. The granulated material was dried for 45 min, at an inlet temperature of 80°C. A similar batch was prepared under the same conditions but instead of 480g maltodextrin a mixture of 240g maltodextrin and 240g methocel E-5 was used.

### B. Coating

2500 g of granulated material as above were sprayed with 1500gm melted HCO. Inlet temperature was 35°C. Spray speed was 50g/min.

This material was effectively used in yoghourt.

## Claims

1. A microcapsule having a core and a coating, the core comprising a food additive, the microcapsule being characterized in that;
said food additive is labile upon simultaneous exposure to heat and water;
said coating comprises hydrogenated castor oil (HCO), whereby said microcapsule is adapted to deliver said food additive to a food product to be baked or cooked and essentially protecting said food additive from simultaneous exposure to heat and water during the baking or cooking.

2. A microcapsule according to claim 1 wherein said coating comprises an HCO film.

3. A microcapsule according to claim 2, wherein the coating comprises also a compatible coating material effective in shifting the melting point of the coating to a temperature within the range of 70-100°C.

4. A microcapsule according to claim 3, wherein said compatible coating material is a polymer or a fatty substance other than HCO.

5. A microcapsule according to any of the preceding claims, wherein the core comprises also an inert substance.

6. A microcapsule according to any of the preceding claims, wherein said food additive is aspartame.

7. A food additive preparation comprising microcapsules according to any one of claims 1 to 6.

8. A preparation according to claim 7, wherein said microcapsules are predominantly of a diameter below about 500 microns.

9. A process for preparing a finished food product comprising mixing various ingredients, cooking or baking said ingredients whereby said finished food product is obtained, the process being characterized in that
at least one of said ingredients is a food product which is labile upon simultaneous exposure to heat and water; and
said food additive is included in a core of a capsule having a coating comprising hydrogenated castor oil (HCO), whereby said food additive is protected from simultaneous exposure to heat and water during the baking or cooking.

10. A process according to claim 9, wherein said food additive is aspartame.

## Patentansprüche

1. Mikrokapsel mit einem einen Nahrungsmittelzusatz umfassenden Kern und einem Überzug, wobei die Mikrokapsel folgendermaßen gekennzeichnet ist:
der Nahrungsmittelzusatz ist labil, wenn er gleichzeitig Hitze und Wasser ausgesetzt ist,
der Überzug umfaßt hydriertes Rizinusöl (HCO), wobei die Mikrokapsel so angepaßt ist, daß der Nahrungsmittelzusatz für ein Nahrungsmittelprodukt bereitgestellt wird, das gebacken oder gekocht werden soll, und im wesentlichen den Nahrungsmittelzusatz davor schützt, daß er gleichzeitig Hitze und Wasser während des Backens oder Kochens ausgesetzt ist.

2. Mikrokapsel nach Anspruch 1, wobei der Überzug einen HCO-Film umfaßt.

3. Mikrokapsel nach Anspruch 2, wobei der Überzug außerdem ein kompatibles Überzugsmaterial umfaßt, das den Schmelzpunkt des Überzugs in den Temperaturbereich von 70 bis 100°C verschieben kann.

4. Mikrokapsel nach Anspruch 3, wobei das kompatible Überzugsmaterial ein Polymer oder eine Fettsubstanz ist, die nicht HCO ist.

5. Mikrokapsel nach einem der vorangehenden Ansprüche, wobei der Kern auch einen inerten Stoff umfaßt.

6. Mikrokapsel nach einem der vorangehenden Ansprüche, wobei der Nahrungsmittelzusatz Aspartam ist.

7. Nahrungsmittelzusatz-Präparat, umfassend Mikrokapseln nach einem der Ansprüche 1 bis 6.

8. Präparat nach Anspruch 7, wobei die Mikrokapseln hauptsächlich einen Durchmesser unter etwa 500 Mikron besitzen.

9. Verfahren zur Herstellung eines Nahrungsmittelendprodukts, umfassend das Mischen verschiedener Bestandteile, das Kochen oder Backen der Bestandteile, wobei das Nahrungsmittelendprodukt erhalten wird, wobei das Verfahren dadurch gekennzeichnet ist, daß
mindestens einer der Bestandteile ein Nahrungsmittelprodukt ist, das labil ist, wenn es gleichzeitig Hitze und Wasser ausgesetzt ist, und
der Nahrungsmittelzusatz in einem Kern einer Kapsel eingeschlossen ist, die einen Überzug aufweist, der hydriertes Rizinusöl (HCO) umfaßt, wodurch der Nahrungsmittelzusatz davor geschützt ist, während des Backens oder Kochens gleichzeitig Hitze und Wasser ausgesetzt zu sein.

10. Verfahren nach Anspruch 9, wobei der Nahrungsmittelzusatz Aspartam ist.

## Revendications

1. Microcapsule ayant un coeur et un enrobage, le coeur comprenant un additif alimentaire, la microcapsule étant caractérisée en ce que
ledit additif alimentaire est labile lors de son exposition simultanée à la chaleur et à l'eau;
ledit enrobage comprend de l'huile de ricin hydrogénée (HCO), d'où il résulte que ladite microcapsule est adaptée pour délivrer ledit additif alimentaire à un produit alimentaire qui doit être cuit au four ou cuit en général et essentiellement pour protéger ledit additif alimentaire de l'exposition simultanée à la chaleur et à l'eau pendant la cuisson au four ou la cuisson en général.

2. Microcapsule selon la revendication 1, dans laquelle ledit enrobage comprend un film de HCO.

3. Microcapsule selon la revendication 2, dans laquelle l'enrobage comprend aussi une substance d'enrobage compatible efficace pour déplacer le point de fusion de l'enrobage à une température se situant dans la gamme comprise entre 70 et 100°C.

4. Microcapsule selon la revendication 3, dans laquelle la substance d'enrobage compatible est un polymère ou une substance grasse autre que HCO.

5. Microcapsule selon l'une quelconque des revendications précédentes, dans laquelle le coeur comprend aussi une substance inerte.

6. Microcapsule selon l'une quelconque des revendications précédentes, dans laquelle ledit additif alimentaire est l'aspartame.

7. Préparation d'additif alimentaire comprenant des microcapsules selon l'une quelconque des revendications 1 à 6.

8. Préparation selon la revendication 7, dans laquelle lesdites microcapsules ont de manière prédominante un diamètre inférieur à environ 500 microns.

9. Procédé pour la préparation d'un produit alimentaire fini qui consiste à mélanger les différents ingrédients, à cuire en général ou à cuire au four lesdits ingrédients pour obtenir ledit produit alimentaire fini, ledit procédé étant caractérisé en ce que
au moins l'un desdits ingrédients est un produit alimentaire qui est labile lors de son exposition simultanée à la chaleur et à l'eau; et
ledit additif alimentaire est compris dans le coeur d'une capsule ayant un enrobage comprenant de l'huile de ricin hydrogénée (HCO), d'où il résulte que ledit additif alimentaire est protégé d'une exposition simultanée à la chaleur et à l'eau pendant la cuisson au four ou la cuisson en général.

10. Procédé selon la revendication 9, caractérisé en ce que l'additif alimentaire est l'aspartame.
